# EUROPEAN PATENT SPECIFICATION

(11) **EP 2 771 594 B1**
(45) Date of publication and mention of the grant of the patent: **29.05.2019**
(21) Application number: 12784831.5
(22) Date of filing: 26.10.2012
(51) Int. Cl.: F16J 1/16

(54) **PISTON ASSEMBLY INCLUDING A POLYMER COATING WITH HARD PARTICLES APPLIED TO SLIDING SURFACES**
KOLBENANORDNUNG MIT EINER POLYMERBESCHICHTUNG MIT HARTPARTIKELN ZUR ANWENDUNG AUF GLEITFLÄCHEN
ENSEMBLE PISTON COMPRENANT UN REVÊTEMENT POLYMÈRE DOTÉ DE PARTICULES DURES APPLIQUÉ À DES SURFACES DE COULISSEMENT

(30) Priority: 27.10.2011 US 201161551998 P
(43) Date of publication of application: 03.09.2014
(73) Proprietor: Tenneco Inc., Lake Forest, IL 60045 (US)
(72) Inventor: KANTOLA, Troy, Whitmore Lake, MI 48189 (US); MILLER, Andrew, J., Plymouth, MI 48170 (US); KRAUSE, Steven, Plymouth, MI 48170 (US)
(74) Representative: Hoffmann Eitle
(86) International application number: PCT/US2012/062032
(87) International publication number: WO 2013/063342

(56) References cited:
- WO-A2-2004/070238
- DE-A1-102008 055 194

## Description

### BACKGROUND OF THE INVENTION

### 1. Field of the Invention

This invention relates generally to piston assemblies for internal combustion engine applications, and methods of forming the same.

### 2. Related Art

Piston assemblies for use in internal combustion engine applications typically comprise a piston body including a cross bore, a connecting rod also including a cross bore aligned with the cross bore of the piston body, and a wrist pin disposed in the aligned bores to couple the piston body to the connecting rod. In the past, bushings have been pressed between the cross bores and wrist pin to reduce friction and wear along the sliding surfaces of those components. Recently, in effort to reduce manufacturing complexity and costs, bushings have been replaced by low-friction coatings, for example the coatings disclosed in U.S. Patent Nos. 7,024,981 and 6,557,457, both assigned to Federal-Mogul World Wide, Inc.

WO 2004/070238 A2 relates to a piston which has a coating applied to one of its sliding surfaces. DE 10 2008 055 194 A1 is further prior art.

### SUMMARY OF THE INVENTION

The invention is defined by the independent claims

One aspect of the invention provides a piston assembly for an internal combustion engine comprising a piston body and a wrist pin. The piston body includes at least one first cross bore presenting a piston sliding surface. The wrist pin is disposed in the first cross bores and presents a pin sliding surface facing the piston sliding surfaces. A coating is disposed on at least one of the sliding surfaces. The coating includes a polymer matrix with hard particles disposed in the matrix.

Another aspect of the invention provides a method of forming a piston assembly. The method includes providing a piston body including at least one first cross bore presenting a piston sliding surface and providing a wrist pin presenting a pin sliding surface. The method further includes disposing a coating including a polymer matrix with hard particles in the matrix on at least one of the sliding surfaces.

The coating of the piston assembly lubricates the interface between the sliding surfaces and separates asperities of the sliding surfaces moving and rubbing against one another during use of the piston assembly in an internal combustion engine application. Thus, the coating reduces wear, scuff, heat, and stress on the sliding surfaces caused by friction between the sliding surfaces during operation. Test results suggest the coating of the present invention provides for reduced wear on the sliding surfaces, compared to other coatings and uncoated sliding surfaces.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a perspective and partial cross-sectional view of a piston body, connecting rod, and a wrist pin according to one embodiment of the invention;
Figure 2 is a cross-sectional view of a coating disposed on the piston body of Figure 1;
Figure 3 is an enlarged cross-sectional view of the coating of Figure 2; and
Figure 4 is a perspective and partial cross-sectional view of a piston body and a wrist pin according to another embodiment of the invention.

### DETAILED DESCRIPTION

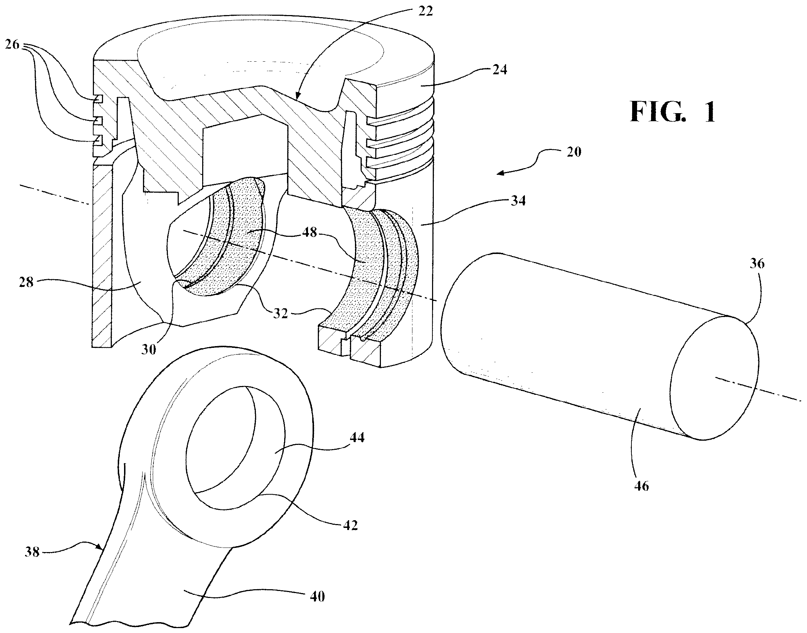

A piston assembly **20** constructed according to one embodiment of the invention is generally shown in Figure 1. The piston assembly **20** comprises a piston body **22** having an upper crown portion **24** and a pin boss formation **28.** The piston body **22** is preferably formed of a steel material and is either cast or forged. However, the piston body **22** can be formed of other metals, such as aluminum. The upper crown portion **24** is formed with ring grooves **26** for maintaining rings (not shown). The piston body **22** further includes the pin boss formation **28** depending from and integral with the upper crown portion **24.** The pin boss formation **28** includes a first cross bore **30** presenting a piston sliding surface **32.** The piston sliding surface **32** extends circumferentially around a center axis and can present oil grooves or clip grooves.

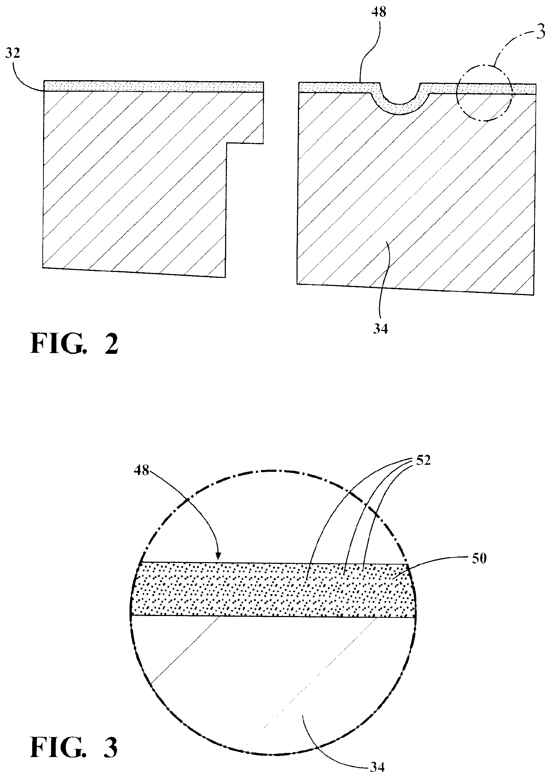

The piston body **22** also includes a skirt **34** extending longitudinally from the upper crown portion **24.** In one embodiment, such as the embodiment of Figures 1 and 2, the skirt **34** is formed separate from the upper crown portion **24.** The skirt **34** also includes a pair of first cross bores **30** each presenting a piston sliding surface **32.** The first cross bore **30** of the pin boss formation **28** is disposed between the pair of first cross bores **30** of the skirt **34**, as shown in Figure 1. The first cross bores **30** of the skirt **34** are axially aligned with the first cross bore **30** of the pin boss formation **28.** The skirt **34** can be formed from a material different from the steel material of the upper crown portion **24**, such as aluminum. Alternatively, the skirt **34** and separate upper crown portion **24** can both be formed of steel.

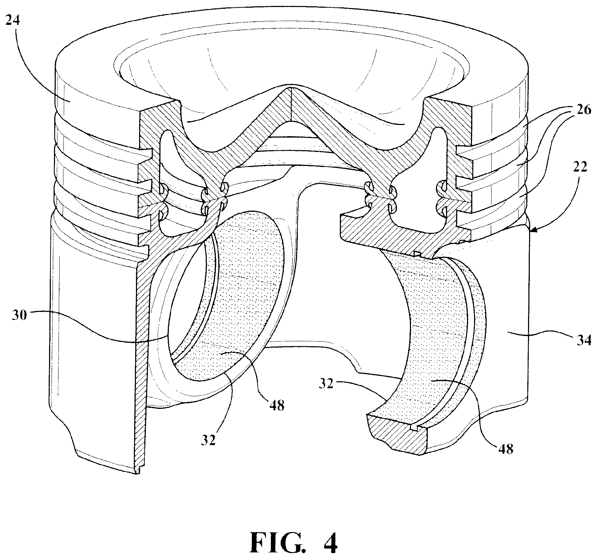

The piston assembly **20** includes a wrist pin **36** joining the skirt **34** to the upper crown portion **24**. The wrist pin **36** extends through the first cross bores **30** to provide an articulated structure. In another embodiment, shown in Figure 4, the piston body **22** includes the skirt **34** formed integral with the upper crown portion **24** in a single piece construction. The skirt **34** of the single piece construction includes a pair of the axially aligned first cross bores **30** facing opposite one another and each having the piston sliding surface **32.** The single construction can also be formed of various materials, such as steel, aluminum, or other metals. In yet another embodiment, the piston assembly **20** includes a fixed wrist pin **36** (not shown), wherein the wrist pin 36 is fixed to the first cross bores **30** via and interference fit.

The piston assembly **20** also includes a connecting rod **38** for connecting the piston body **22** to a crankshaft (not shown) of the internal combustion engine. The connecting rod **38** includes a shaft **40** having a small end formed with a second cross bore **42** for aligning with the first cross bores **30** of the pin boss formation **28** and skirt **34.** The second cross bore **42** presents a rod sliding surface **44.** The connecting rod **38** is preferably formed of steel or another metal and is either cast or forged.

The piston assembly **20** is formed by aligning the first cross bores **30** of the piston body **22** with the second cross bore **42** of the connecting rod **38**, and then disposing the wrist pin **36** in the aligned cross bores **30, 42**. Thus, the wrist pin **36** connects the connecting rod **38** to the piston body **22.** If the piston body **22** comprises the single piece construction, then the wrist pin **36** connects the single piece construction to the connecting rod **38.** The wrist pin **36** also has a pin sliding surface **46** facing outwardly toward the piston sliding surface **32** and the rod sliding surface **44.** The wrist pin **36** is also preferably formed of steel or another metal. Alternatively, the piston assembly **20** can comprise other configurations with sliding surfaces or can be formed of other materials.

A coating **48** including a polymer matrix **50** with hard particles **52** disposed throughout the polymer matrix **50** is then disposed on at least one of the sliding surfaces **32, 44, 46,** and preferably at least the piston sliding surface **32.** The coating **48** may extend 360° along at least one of the sliding surfaces **32, 44, 46,** thus encompassing the entire sliding surface **32, 44, 46.** Alternatively, the coating **48** may extend less than 360° along at least one of the sliding surfaces **32, 44, 46,** such as a fraction of at least one of the sliding surfaces **32, 44, 46.**

In one embodiment, as shown in Figure 1, the coating **48** is disposed continuously along the piston sliding surfaces **32** of the first cross bores **30.** The embodiment of Figure 4 also includes the coating **48** disposed continuously along the piston sliding surfaces **32** of the aligned first cross bores **30.** In another embodiment, the coating **48** is disposed on the pin sliding surface **46** of the wrist pin **36** and/or the rod sliding surface **44** of the connecting rod **38.** The coating **48** can alternatively be disposed on all of the sliding surfaces **32, 44, 46** or on any combination of the sliding surfaces **32, 44, 46.** In one embodiment, the coating **48** has a thickness of 4 to 20 microns.

The coating **48** comprises the polymer matrix **50** and the plurality of hard particles **52** dispersed throughout the polymer matrix **50.** Examples of the coating **48** are disclosed in International Publication No. WO 2010/076306 and U.S. Patent Application Serial No. 13/142,887. In one embodiment the coating **48** includes, in volume percent (vol. %) of the coating **48,** the polymer matrix **50** in an amount of at least 40.0 vol. %, or at least 50 vol. %, or at least 60
vol. %, or at least 80 vol. %, or at least 85 vol. %, based on the total volume of the coating **48.** The polymer matrix **50** can be formed of a single polymer or a mixture of polymers, resin, plastics, or duroplastics, and either thermoplastic or thermoset polymers. The polymer matrix **50** can also include synthetic and cross-linked polymers. Preferably, the polymer matrix **50** has a high temperature resistance and excellent chemical resistance. The polymer matrix **50** typically has a melting point of at least 210° C, preferably at least 220° C, or at least 230° C, or at least 250° C. In one embodiment, the polymer matrix **50** includes at least one of polyarylate, polyetheretherketone (PEEK), polyethersulfone (PES), polyamide imide (PAI), polyimide (PI), expoxy resin, polybenzimidazole (PBI), and silicone resin. In another embodiment, the polymer matrix **50** includes a bonding agent, such as an unsaturated polyester resin or silicone, hardened by means of UV radiation.

The hard particles **52** of the coating **48** are typically formed of a material having a hardness of at least 600 HV/0.5, more preferably at least 620 HV/0.5, and even more preferably at least 650 HV/0.5, at a temperature of 25° C. The hard particles **52** also have a particle size sufficient to affect at least one of the ductility, wear resistance, and strength of the coating **48.** In one embodiment, the hard particles **52** have a D50 particle size by volume not greater than 10.0 microns, or not greater than 8.0 microns, or not greater than 6.0 microns, and preferably from 0.1 to 5.0 microns.

The D50 particle size by volume is the equivalent spherical diameter of the hard particles **52,** also referred to as a D50 diameter, wherein 50.0 wt. % of the hard particles **52** have a larger equivalent spherical diameter and 50.0 wt. % of the hard particles **52** have a smaller equivalent spherical diameter. The D50 diameter is determined from a particle size distribution display of the hard particles **52,** before any processing of the hard particles **52** following common testing practice. In one embodiment, the hard particles **52** include a mixture of particle sizes, such as a first group of particles having a smaller particle size than a second group of particles. The first and second groups of the hard particles **52** are typically dispersed evenly throughout the polymer matrix **50.**

In one embodiment, the hard particles **52** of the coating **48** include at least one of metal nitrides, such as such as cubic BN, and Si₃N₄; metal carbides, such as SiC and B₄C; metal oxides, such as TiO₂, Fe₂O₃, and SiO₂; metal silicides, such as MoSi₂; metal borides; metal phosphides, such as Fe₃P; intermetallic compounds; metal oxynitrides; metal carbonitrides; metal oxycarbides; metal powders of Ag, Pb, Au, SnBi and/or Cu; and mixtures thereof. The coating **48** typically includes the hard particles **52** in an amount of 0.1 to 20.0 vol. %, or 3.0 to 8.0 vol. %, based on the total volume of the coating **48.** In one embodiment, the coating **48** includes Fe₂O₃ as one of the hard particles **52** in an amount of 0.1 to 15.0 vol. %, or 0.5 to 8.0 vol. %, based on the total volume of the coating **28,** and other hard particles **48** in an amount up to 5.0 vol. %, or 3.0 to 5.0 vol. %, based on the total volume of the coating **48.**

The coating **48** also typically includes at least one solid lubricant, such as MoS₂, graphite, WS₂. hexagonal boron nitride (h-BN), and PTFE. The solid lubricant can also include metal sulfides with layered structures. In one embodiment, the coating **48** includes, in vol. % of the coating **48,** the solid lubricant in an amount of 5.0 to 40.0 vol. %, or 5.0 to 30.0 vol. %, or up to 30.0 vol. %, or up to 9.5 vol. %, based on the total volume of the coating **48.**

The coating **48** is applied to at least one of the sliding surfaces **32, 44, 46,** of the respective piston body **22,** skirt **34,** connecting rod **38,** or wrist pin **36** presenting the sliding surface **32, 44, 46.** The coating **48** can be applied as a liquid or a powder, and is typically applied according to methods disclosed in US 2010/076306, or other methods. For example, the coating **48** can be applied to the sliding surfaces **32, 44, 46** by dipping, brushing, atomizing, spraying, printing, or screen printing. The coating **48** may be applied 360° along at least one of the sliding surfaces **32, 44, 46,** thus encompassing the entire sliding surface **32, 44, 46.** Alternatively, the coating **48** may be applied less than 360° along at least one of the sliding surfaces **32, 44, 46,** such as a fraction of the sliding surface **32, 44, 46.** In one embodiment, as shown in Figure 2, the coating **48** is applied directly to the piston sliding surface **32** without another layer between the piston sliding surface **32** and the coating **48.** In another embodiment, when the piston assembly **20** includes the fixed wrist pin **36,** the method can include applying the coating **48** to the piston sliding surfaces **32** and/or the pin sliding surface **46** prior to fixing the wrist pin **36** to the piston sliding surfaces **32.** The wrist pin **36** can also be heated prior to sliding the wrist pin **36** along the piston sliding surfaces **32** and through the first cross bores **30.**

However, in another embodiment, multiple layers of the coating **48,** as disclosed in WO 2010/076306, are applied to at least one of the sliding surfaces **32, 44, 46.** The compositions of the layers can be the same or different from one another. For example, a primer can be applied to the piston sliding surface **32** before the coating **48** is applied. In another example, a layer of the polymer matrix **50,** without the hard particles **52,** is applied to the piston sliding surface **32** prior to applying the coating **48** with hard particles **52,** or after applying the coating **48** with hard particles **52.** Alternatively, several layers of the coating **48** are applied to the piston sliding surface **32** as a gradient, with the layer properties continuously changing along the thickness of the coating **48.** For example, the amount of hard particles **52** can be higher in a base layer than in a top layer, or higher in a top layer than in a base layer. In one embodiment, the coating **48** comprises a plurality of layers, wherein the amount of Fe₂O₃ in the bottom layer is higher than the amount of Fe₂O₃ in the top layer.

The coating **48** of the piston assembly **20** lubricates the interface between the sliding surfaces **32, 44, 46** and separates asperities of the sliding surfaces **32, 44, 46** moving and rubbing against one another during use of the piston assembly **20** in an internal combustion engine application. The hard particles **52** in the polymer matrix **50** may lap or cover asperities of the adjacent sliding surfaces **32, 44, 46,** thus affecting bearing ratio and reducing friction. The hard particles **52** may also lower localized pressure by increasing the surface area of the sliding surfaces **32, 44, 46.** Thus, the coating **48** reduces wear, scuff, heat, and stress on the sliding surfaces **32, 44, 46** caused by friction between the sliding surfaces **32, 44, 46** during operation. Test results suggest the coatings **48** of the present invention provide for reduced wear on the sliding surfaces **32, 44, 46,** compared to other coatings and uncoated metal sliding surfaces. Other advantages are provided by the piston assembly **20** with the fixed wrist pin **36.** In this case, the coating **48** improves the fit of the wrist pin **36** in the first cross bores **30,** improves tribology, and reduces noise during operation of the piston assembly **20.** The coating **48** also compensates for imperfections and asperity variation along the piston sliding surface **32,** and thus reduces manufacturing costs.

Obviously, many modifications and variations of the present invention are possible in light of the above teachings and may be practiced otherwise within the scope of the appended claims.

## Claims

1. A piston assembly, comprising:
a piston body (22) including an upper crown portion (24) and a skirt (34) extending longitudinally from the upper crown portion (24), the skirt (34) including a pair of first cross bores (30) each presenting a piston sliding surface (32);
a wrist pin (36) disposed in the first cross bores (30), said wrist pin presenting a pin sliding surface facing said piston sliding surface (32); **characterised by**
a coating (48) disposed on all of said piston sliding surfaces (32), said coating (48) including a polymer matrix (50) with hard particles (52) disposed in said matrix.

2. The piston assembly of claim 1, wherein said hard particles of said coating (48) have a hardness of at least 600 HV/0.5 at a temperature of 25° C and a D50 particle size by volume not greater than 10.0 microns.

3. The piston assembly of claim 1, wherein said polymer matrix (50) includes at least one of polyarylate, polyetheretherketone (PEEK), polyethersulfone (PES), polyamide imide (PAI), polyimide (PI), expoxy resin, polybenzimidazole (PBI), and silicone resin.

4. The piston assembly of claim 1, wherein said hard particles (52) include at least one of a metal nitride, metal carbide, metal oxide, metal silicide, metal boride, metal phosphide, intermetallic compound, metal oxynitrides, metal carbonitride, metal oxycarbide, and a metal powder of Ag, Pb, Au, SnBi and/or Cu.

5. The piston assembly of claim 1, wherein said polymer matrix (50) includes polyamide imide (PAI) and said hard particles (52) include Fe203.

6. The piston assembly of claim 1, wherein said coating (48) includes said polymer matrix (50) in an amount of at least 40.0 vol. % and said hard particles (52) in an amount of 0.1 to 20.0 vol. %, based on the total volume of said coating (48).

7. The piston assembly of claim 1, wherein said coating includes said hard particles (52) in an amount of 3.0 to 8.0 vol. %, based on the total volume of said coating (48).

8. The piston assembly of claim 1, wherein said coating (48) includes at least one solid lubricant in an amount of 5.0 to 40.0 vol. %, based on the total volume of the coating, and said solid lubricant includes at least one of a metal sulfide, hexagonal boron nitride (h-BN), PTFE.

9. The piston assembly of claim 1, further comprising a connecting rod (38) including a second cross bore (42) presenting a rod sliding surface, said second cross bore (42) being axially aligned with the first cross bores (30) of said piston body, and wherein said wrist pin (38) is disposed in said aligned cross bores and couples said piston body to said connecting rod (42).

10. The piston assembly of claim 1, wherein said piston body is formed of a metal material;
said piston body including a pin boss formation (28) depending from and integral with said upper crown portion;
said pin boss formation (28) including one of said first cross bores (30);
said pair of said first cross bores (30) of said skirt (34) each presenting said piston sliding surface and axially aligned with said first cross bore of said pin boss formation;
said first cross bore of said pin boss formation (28) being disposed between said pair of first cross bores of said skirt;
a connecting rod (38) including a shaft (40) having a small end formed with a second cross bore (42) for aligning with the first cross bores of the piston body;
said second cross bore presenting a rod sliding surface; said wrist pin (36) extending through said first cross bores and said second cross bore to join said skirt to said upper crown portion and said piston body to said connecting rod; said coating being disposed on all of said sliding surfaces; said coating (48) including said polymer matrix in an amount of at least 40.0 vol. %, based on the total volume of said coating;
said polymer matrix (50) having a melting point of at least 210° C;
said polymer matrix including at least one of polyarylate, polyetheretherketone (PEEK), polyethersulfone (PES), polyamide imide (PAI), polyimide (PI), expoxy resin, polybenzimidazole (PBI), and silicone resin;
said coating (48) including said hard particles in an amount of 0.1 to 20.0 vol. %, based on the total volume of said coating;
said hard particles (52) having a hardness of at least 600 HV/0.5 at a temperature of 25° C and a D50 particle size by volume not greater than 10.0 microns;
said hard particles including at least one of a metal nitride, metal carbide, metal oxide, metal silicide, metal boride, metal phosphide, intermetallic compound, metal oxynitrides, metal carbonitride, metal oxycarbide, and a metal powder of Ag, Pb, Au, SnBi and/or Cu;
said coating (48) including at least one solid lubricant in an amount of 5.0 to 40.0 vol. %, based on the total volume of the coating;
said solid lubricant including at least one of a metal sulfide, hexagonal boron nitride (h-BN), PTFE; and
said coating having a thickness of 4 to 20 microns.

11. A method of forming a piston assembly, comprising the steps of:
providing a piston body (22) including a pair of first cross bores (30) each presenting a piston sliding surface and a wrist pin presenting a pin sliding surface; and
disposing a coating (48) including a polymer matrix with hard particles in the matrix on all of the piston sliding surfaces (32).

12. The method of claim 11 including providing a connecting rod (38) including a second cross bore presenting a rod sliding surface; axially aligning the second cross bore of the connecting rod (38) with the at least one piston sliding surface of the piston body; and disposing the wrist pin in the aligned cross bores to couple the piston body (22) to the connecting rod (38).

13. The method of claim 11, wherein the coating (48) includes the hard particles in an amount of 0.1 to 20.0 vol. %, based on the total volume of the coating, the hard particles have a hardness of at least 600 HV/0.5 at a temperature of 25° C, and the hard particles have a D50 particle size by volume not greater than 10.0 microns.

14. The method of claim 11, wherein the coating (48) is applied by at least one of the following steps: dipping, brushing, atomizing, spraying, printing, and screen printing.

15. The method of claim 11, wherein the hard particles (52) include at least one of a metal nitride, metal carbide, metal oxide, metal silicide, metal boride, metal phosphide, intermetallic compound, metal oxynitrides, metal carbonitride, metal oxycarbide, and a metal powder of Ag, Pb, Au, SnBi and/or Cu.

## Patentansprüche

1. Kolbenbaugruppe, umfassend:
einen Kolbenkörper (22), der einen oberen Kronenbereich (24) und eine Schürze (34), die sich längs von dem oberen Kronenbereich (24) erstreckt, beinhaltet, wobei die Schürze (34) ein Paar von ersten Kreuzbohrungen (30) beinhaltet, die jeweils eine Kolbengleitoberfläche (32) darbieten;
einen Kolbenbolzen (36), der in den ersten Kreuzbohrungen (30) angeordnet ist, wobei der Kolbenbolzen eine Bolzengleitoberfläche darbietet, die der Kolbengleitoberfläche (32) zugewandt ist; **gekennzeichnet durch**
eine Beschichtung (48), die auf allen Kolbengleitoberflächen (32) angeordnet ist, wobei die Beschichtung (48) eine Polymermatrix (50) mit in der Matrix angeordneten harten Partikeln (52) beinhaltet.

2. Kolbenbaugruppe nach Anspruch 1, wobei die harten Partikel der Beschichtung (48) eine Härte von mindestens 600 HV/0,5 bei einer Temperatur von 25 °C und eine D50 Partikelgröße nach Volumen nicht größer als 10,0 Mikrometer aufweisen.

3. Kolbenbaugruppe nach Anspruch 1, wobei die Polymermatrix (50) mindestens eines von Polyarylat, Polyetheretherketon (PEEK), Polyethersulfon (PES), Polyamidimid (PAI), Polyimid (PI), Expoxyharz, Polybenzimidazol (PBI) und Silikonharz beinhaltet.

4. Kolbenbaugruppe nach Anspruch 1, wobei die harten Partikel (52) mindestens eines von einem Metallnitrid, Metallcarbid, Metalloxid, Metallsilizid, Metallborid, Metallphosphid, einer intermetallischen Verbindung, Metalloxynitriden, einem Metallcarbonitrid, Metalloxycarbid und einem Metallpulver aus Ag, Pb, Au, SnBi und/oder Cu beinhalten.

5. Kolbenbaugruppe nach Anspruch 1, wobei die Polymermatrix (50) Polyamidimid (PAI) beinhaltet und die harten Partikel (52) Fe2O3 beinhalten.

6. Kolbenbaugruppe nach Anspruch 1, wobei die Beschichtung (48) die Polymermatrix (50) in einer Menge von mindestens 40,0 Volumen-% und die harten Partikel (52) in einer Menge von 0,1 bis 20,0 Volumen-%, bezogen auf das Gesamtvolumen der Beschichtung (48), beinhaltet.

7. Kolbenbaugruppe nach Anspruch 1, wobei die Beschichtung die harten Partikel (52) in einer Menge von 3,0 bis 8,0 Volumen-%, bezogen auf das Gesamtvolumen der Beschichtung (48), beinhaltet.

8. Kolbenbaugruppe nach Anspruch 1, wobei die Beschichtung (48) mindestens ein festes Schmiermittel in einer Menge von 5,0 bis 40,0 Volumen-%, bezogen auf das Gesamtvolumen der Beschichtung, beinhaltet, und das feste Schmiermittel mindestens eines von einem Metallsulfid, hexagonalem Bornitrid (h-BN), PTFE beinhaltet.

9. Kolbenbaugruppe nach Anspruch 1, weiter umfassend eine Verbindungsstange (38), die eine zweite Kreuzbohrung (42) beinhaltet, die eine Stangengleitoberfläche darbietet, wobei die zweite Kreuzbohrung (42) axial mit den ersten Kreuzbohrungen (30) des Kolbenkörpers ausgerichtet ist, und wobei der Kolbenbolzen (38) in den ausgerichteten Kreuzbohrungen angeordnet ist und den Kolbenkörper mit der Verbindungsstange (42) koppelt.

10. Kolbenbaugruppe nach Anspruch 1, wobei der Kolbenkörper aus einem Metallmaterial gebildet ist;
wobei der Kolbenkörper eine Bolzenaugenformation (28) beinhaltet, die von dem oberen Kronenbereich herabhängt und mit diesem einstückig ist;
wobei die Bolzenaugenformation (28) eine der ersten Kreuzbohrungen (30) beinhaltet;
wobei das Paar der ersten Kreuzbohrungen (30) der Schürze (34) jeweils die Kolbengleitoberfläche darbieten und axial mit der ersten Kreuzbohrung der Bolzenaugenformation ausgerichtet sind;
wobei die erste Kreuzbohrung der Bolzenaugenformation (28) zwischen dem Paar von ersten Kreuzbohrungen der Schürze angeordnet ist;
wobei eine Verbindungsstange (38) einen Schaft (40) beinhaltet, der ein kleines Ende aufweist, das mit einer zweiten Kreuzbohrung (42) zum Ausrichten mit den ersten Kreuzbohrungen des Kolbenkörpers gebildet ist;
wobei die zweite Kreuzbohrung eine Stangengleitoberfläche darbietet;
wobei der Kolbenbolzen (36) sich durch die ersten Kreuzbohrungen und die zweite Kreuzbohrung erstreckt, um die Schürze mit dem oberen Kronenbereich und den Kolbenkörper mit der Verbindungsstange zu verbinden; wobei die Beschichtung auf allen der Gleitoberflächen angeordnet ist; wobei die Beschichtung (48) die Polymermatrix in einer Menge von mindestens 40,0 Volumen-%, bezogen auf das Gesamtvolumen der Beschichtung, beinhaltet;
wobei die Polymermatrix (50) einen Schmelzpunkt von mindestens 210 °C aufweist;
wobei die Polymermatrix mindestens eines von Polyarylat, Polyetheretherketon (PEEK), Polyethersulfon (PES), Polyamidimid (PAI), Polyimid (PI), Expoxyharz, Polybenzimidazol (PBI) und Silikonharz beinhaltet;
wobei die Beschichtung (48) die harten Partikel in eine Menge von 0,1 bis 20,0 Volumen-%, bezogen auf das Gesamtvolumen der Beschichtung, beinhaltet;
wobei die harten Partikel (52) eine Härte von mindestens 600 HV/0,5 bei einer Temperatur von 25 °C und eine D50 Partikelgröße nach Volumen nicht größer als 10,0 Mikrometer aufweisen;
wobei die harten Partikel mindestens eines von einem Metallnitrid, Metallcarbid, Metalloxid, Metallsilizid, Metallborid, Metallphosphid, einer intermetallischen Verbindung, Metalloxynitriden, einem Metallcarbonitrid, Metalloxycarbid und einem Metallpulver aus Ag, Pb, Au, SnBi und/oder Cu beinhalten;
wobei die Beschichtung (48) das mindestens eine feste Schmiermittel in einer Menge von 5,0 bis 40,0 Volumen-%, bezogen auf das Gesamtvolumen der Beschichtung, beinhaltet;
wobei das feste Schmiermittel mindestens eines von einem Metallsulfid, hexagonalem Bornitrid (h-BN), PTFE beinhaltet; und
wobei die Beschichtung eine Dicke von 4 bis 20 Mikrometern aufweist.

11. Verfahren zum Bilden einer Kolbenbaugruppe, umfassend die folgenden Schritte:
Bereitstellen eines Kolbenkörpers (22), der ein Paar von ersten Kreuzbohrungen (30), die jeweils eine Kolbengleitoberfläche darbieten, und einen Kolbenbolzen, der eine Bolzengleitoberfläche darbietet, beinhaltet; und
Anordnen einer Beschichtung (48), die eine Polymermatrix mit harten Partikeln in der Matrix beinhaltet, auf allen Kolbengleitoberflächen (32).

12. Verfahren nach Anspruch 11, beinhaltend Bereitstellen einer Verbindungsstange (38), die eine zweite Kreuzbohrung beinhaltet, die eine Stangengleitoberfläche darbietet; axiales Ausrichten der zweiten Kreuzbohrung der Verbindungsstange (38) mit der mindestens einen Kolbengleitoberfläche des Kolbenkörpers; und Anordnen des Kolbenbolzens in den ausgerichteten Kreuzbohrungen, um den Kolbenkörper (22) mit der Verbindungsstange (38) zu koppeln.

13. Verfahren nach Anspruch 11, wobei die Beschichtung (48) die harten Partikel in eine Menge von 0,1 bis 20,0 Volumen-%, bezogen auf das Gesamtvolumen der Beschichtung, beinhaltet; wobei die harten Partikel eine Härte von mindestens 600 HV/0,5 bei einer Temperatur von 25 °C aufweisen und die harten Partikel eine D50 Partikelgröße nach Volumen nicht größer als 10,0 Mikrometer aufweisen.

14. Verfahren nach Anspruch 11, wobei die Beschichtung (48) durch mindestens einen der folgenden Schritte aufgebracht wird: Eintauchen, Bürsten, Zerstäuben, Sprühen, Drucken und Siebdrucken.

15. Verfahren nach Anspruch 11, wobei die harten Partikel (52) mindestens eines von einem Metallnitrid, Metallcarbid, Metalloxid, Metallsilizid, Metallborid, Metallphosphid, einer intermetallischen Verbindung, Metalloxynitriden, einem Metallcarbonitrid, Metalloxycarbid und einem Metallpulver aus Ag, Pb, Au, SnBi und/oder Cu beinhalten.

## Revendications

1. Ensemble piston, comprenant :
un corps de piston (22) comportant une partie formant couronne supérieure (24) et une jupe (34) s'étendant longitudinalement à partir de la partie formant couronne supérieure (24), la jupe (34) comportant une paire de premiers alésages transversaux (30) présentant chacun une surface de coulissement de piston (32) ;
un axe de piston (36) disposé dans les premiers alésages transversaux (30), ledit axe de piston présentant une surface de coulissement d'axe faisant face à ladite surface de coulissement de piston (32) ; **caractérisé par**
un revêtement (48) disposé sur l'ensemble desdites surfaces de coulissement de piston (32), ledit revêtement (48) comportant une matrice polymère (50) avec des particules dures (52) disposées dans ladite matrice.

2. Ensemble piston selon la revendication 1, dans lequel lesdites particules dures dudit revêtement (48) ont une dureté d'au moins 600 HV/0,5 à une température de 25 °C et une taille de particule D50 en volume inférieure ou égale à 10,0 microns.

3. Ensemble piston selon la revendication 1, dans lequel ladite matrice polymère (50) comporte au moins un parmi du polyarylate, de la polyétheréthercétone (PEEK), de la polyéthersulfone (PES), du polyamide-imide (PAI), du polyimide (PI), de la résine époxy, du polybenzimidazole (PBI) et de la résine de silicone.

4. Ensemble piston selon la revendication 1, dans lequel lesdites particules dures (52) comportent au moins un parmi un nitrure métallique, un carbure métallique, un oxyde métallique, un siliciure métallique, un borure métallique, un phosphure métallique, un composé intermétallique, des oxynitrures métalliques, un carbonitrure métallique, un oxycarbure métallique et une poudre métallique d'Ag, de Pb, d'Au, de SnBi et/ou de Cu.

5. Ensemble piston selon la revendication 1, dans lequel ladite matrice polymère (50) comporte du polyamide-imide (PAI) et lesdites particules dures (52) comportent du Fe203.

6. Ensemble piston selon la revendication 1, dans lequel ledit revêtement (48) comporte ladite matrice polymère (50) en une quantité d'au moins 40,0 % en volume et lesdites particules dures (52) en une quantité de 0,1 à 20,0 % en volume, sur la base du volume total dudit revêtement (48).

7. Ensemble piston selon la revendication 1, dans lequel ledit revêtement comporte lesdites particules dures (52) en une quantité de 3,0 à 8,0 % en volume, sur la base du volume total dudit revêtement (48).

8. Ensemble piston selon la revendication 1, dans lequel ledit revêtement (48) comporte au moins un lubrifiant solide en une quantité de 5,0 à 40,0 % en volume, sur la base du volume total du revêtement, et ledit lubrifiant solide comporte au moins un parmi un sulfure métallique, du nitrure de bore hexagonal (h-BN), du PTFE.

9. Ensemble piston selon la revendication 1, comprenant en outre une bielle (38) comportant un second alésage transversal (42) présentant une surface de coulissement de bielle, ledit second alésage transversal (42) étant aligné axialement avec les premiers alésages transversaux (30) dudit corps de piston, et dans lequel ledit axe de piston (38) est disposé dans lesdits alésages transversaux alignés et couple ledit corps de piston à ladite bielle (42).

10. Ensemble piston selon la revendication 1, dans lequel ledit corps de piston est formé d'un matériau métallique ;
ledit corps de piston comportant une formation de bossage d'axe (28) dépendante et solidaire de ladite partie formant couronne supérieure ;
ladite formation de bossage d'axe (28) comportant l'un desdits premiers alésages transversaux (30) ;
ladite paire desdits premiers alésages transversaux (30) de ladite jupe (34) présentant chacun ladite surface de coulissement de piston et étant aligné axialement avec ledit premier alésage transversal de ladite formation de bossage d'axe ;
ledit premier alésage transversal de ladite formation de bossage d'axe (28) étant disposé entre ladite paire de premiers alésages transversaux de ladite jupe ;
une bielle (38) comportant un arbre (40) ayant une petite extrémité formée avec un second alésage transversal (42) pour un alignement avec les premiers alésages transversaux du corps de piston ;
ledit second alésage transversal présentant une surface de coulissement de bielle ;
ledit axe de piston (36) s'étendant à travers lesdits premiers alésages transversaux et ledit second alésage transversal pour joindre ladite jupe à ladite partie formant couronne supérieure et ledit corps de piston à ladite bielle ; ledit revêtement étant disposé sur l'ensemble desdites surfaces de coulissement; ledit revêtement (48) comportant ladite matrice polymère en une quantité d'au moins 40,0 % en volume, sur la base du volume total dudit revêtement ;
ladite matrice polymère (50) ayant un point de fusion d'au moins 210 °C ;
ladite matrice polymère comportant au moins un parmi du polyarylate, de la polyétheréthercétone (PEEK), de la polyéthersulfone (PES), du polyamide-imide (PAI), du polyimide (PI), de la résine époxy, du polybenzimidazole (PBI) et de la résine de silicone ;
ledit revêtement (48) comportant lesdites particules dures en une quantité de 0,1 à 20,0 % en volume, sur la base du volume total dudit revêtement ;
lesdites particules dures (52) ayant une dureté d'au moins 600 HV/0,5 à une température de 25 °C et une taille de particule D50 en volume inférieure ou égale à 10,0 microns ;
lesdites particules dures comportant au moins un parmi un nitrure métallique, un carbure métallique, un oxyde métallique, un siliciure métallique, un borure métallique, un phosphure métallique, un composé intermétallique, des oxynitrures métalliques, un carbonitrure métallique, un oxycarbure métallique et une poudre métallique d'Ag, de Pb, d'Au, de SnBi et/ou de Cu ;
ledit revêtement (48) comportant au moins un lubrifiant solide en une quantité de 5,0 à 40,0 % en volume, sur la base du volume total du revêtement ;
ledit lubrifiant solide comportant au moins un parmi un sulfure métallique, du nitrure de bore hexagonal (h-BN), du PTFE ; et
ledit revêtement ayant une épaisseur de 4 à 20 microns.

11. Procédé de formation d'un ensemble piston, comprenant les étapes suivantes :
fourniture d'un corps de piston (22) comportant une paire de premiers alésages transversaux (30) présentant chacun une surface de coulissement de piston et un axe de piston présentant une surface de coulissement d'axe ; et
disposition d'un revêtement (48) comportant une matrice polymère avec des particules dures dans ladite matrice sur l'ensemble des surfaces de coulissement de piston (32).

12. Procédé selon la revendication 11 comportant la fourniture d'une bielle (38) comportant un second alésage transversal présentant une surface de coulissement de bielle ; l'alignement axial du second alésage transversal de la bielle (38) avec la au moins une surface de coulissement de piston du corps de piston ; et la disposition de l'axe de piston dans les alésages transversaux alignés pour coupler le corps de piston (22) à la bielle (38).

13. Procédé selon la revendication 11, dans lequel le revêtement (48) comporte les particules dures en une quantité de 0,1 à 20,0 % en volume, sur la base du volume total du revêtement, les particules dures ont une dureté d'au moins 600 HV/0,5 à une température de 25 °C, et les particules dures ont une taille de particule D50 en volume inférieure ou égale à 10,0 microns.

14. Procédé selon la revendication 11, dans lequel le revêtement (48) est appliqué par au moins l'une des étapes suivantes : immersion, application au pinceau, atomisation, pulvérisation, impression et sérigraphie.

15. Procédé selon la revendication 11, dans lequel les particules dures (52) comportent au moins un parmi un nitrure métallique, un carbure métallique, un oxyde métallique, un siliciure métallique, un borure métallique, un phosphure métallique, un composé intermétallique, des oxynitrures métalliques, un carbonitrure métallique, un oxycarbure métallique et une poudre métallique d'Ag, de Pb, d'Au, de SnBi et/ou de Cu.
